# EUROPÄISCHE PATENTSCHRIFT

(11) **EP 0 594 671 B1**
(45) Veröffentlichungstag und Bekanntmachung des Hinweises auf die Patenterteilung: **20.09.2000**
(21) Anmeldenummer: 92914317.0
(22) Anmeldetag: 03.07.1992
(51) Int. Cl.: C08F 4/00, C08F 2/38

(54) **ZUSAMMENSETZUNG MIT OLEFINISCH UNGESÄTTIGTEN VERBINDUNGEN UND HYDRAZONEN**
COMPOSITION CONTAINING OLEFINICALLY UNSATURATED COMPOUNDS AND HYDRAZONES
COMPOSITION AVEC DES COMPOSES OLEFINIQUEMENT INSATURES ET DES HYDRAZONES

(30) Priorität: 12.07.1991 DE 4123194
(43) Veröffentlichungstag der Anmeldung: 04.05.1994
(73) Patentinhaber: Henkel Kommanditgesellschaft auf Aktien, 40191 Düsseldorf (DE)
(72) Erfinder: HUVER, Thomas, D-4000 Düsseldorf 12 (DE); KREMEYER, Petra, D-4300 Essen 11 (DE); KLAUCK, Wolfgang, D-4005 Meerbusch 2 (DE); NICOLAISEN, Christian, D-3303 Ronnenberg 1 (DE); KAMMER, Lothar, D-3003 Ronnenberg 3 (DE)
(86) Internationale Anmeldenummer: EP9201506
(87) Internationale Veröffentlichungsnummer: WO9301218

(56) Entgegenhaltungen:
- WO-A-91/10687
- US-A- 4 112 146
- US-A- 4 855 373

## Beschreibung

Die Erfindung betrifft eine Zusammensetzung, die eine radikalisch polymerisierbare olefinisch ungesättigte Verbindung und ein Hydrazon eines aromatischen Aldehyds oder Ketons enthält. Die Erfindung betrifft auch deren Herstellung und deren Verwendung als Klebstoff und Dichtungsmasse sowie ihre Verwendung zur Beschichtung und Herstellung von Kunststoff-Formkörpern. Derartige Zusammensetzungen polymerisieren radikalisch bei Raumtemperatur.

Olefinisch ungesättigte Systeme bedürfen zur Härtung durch Peroxide oder Hydroperoxide insbesondere dann ausgewählter Starter bzw. Aktivatorsysteme, wenn die Reaktionsauslösung bei niederen Temperaturen, beispielsweise bei Raumtemperatur oder nur schwach erhöhten Temperaturen, erfolgen soll. Bekannt ist beispielsweise, daß ausgewählten tertiären Aminverbindungen mit partiell aromatischer Substitution am N-Atom eine solche Aktivatorfunktion zukommt. Bekannte Aktivatoren für die Polymerisationsauslösung, beispielsweise mittels Dibenzoylperoxid, sind insbesondere Dimethylanilin und Dimethyl-p-Toluidin.

Eine ganz andere bekannte Aktivatorklasse für die oxidative Polymerisationsauslösung bestimmter ungesättigter Systeme, nämlich trocknender Öle, sind im System wenigstens anteilsweise lösliche Metallverbindungen solcher Metalle, die mit mehreren Wertigkeitsstufen auftreten können und über intermediär auftretende Wertigkeitsverschiebungen bei Interaktion mit weiteren Komponenten des System die Startreaktion beschleunigen. Schon seit langem sind derartige in organischen Lösungsmitteln und/oder in Bindemitteln hinreichend lösliche Metallverbindungen solcher Metalle als sogenannte Trockenstoffe zur Lufttrocknung von Anstrichmitteln, Firnissen und dergleichen auf Basis ungesättigter Öle bekannt. In Betracht kommen hier insbesondere hinreichend öllösliche Verbindungen solcher Übergangsmetalle, die zum Auftreten in mehreren Wertigkeitsstufen befähigt sind. Die Fähigkeit zur Härtungsbeschleunigung ist bei den einzelnen Komponenten unterschiedlich stark ausgeprägt. Vornehmlich kommen Verbindungen des Kobalts und/oder des Mangans in Betracht, aber auch Eisen wirkt härtungsbeschleunigend. Daneben und insbesondere in Kombination mit diesen hochwirksamen metallischen Komponenten können vergleichbare Verbindungen anderer Metalle eingesetzt werden, die gegebenenfalls auch zur Ausbildung mehrerer Wertigkeitsstufen befähigt sind. Eine ausführliche Darstellung solcher Systeme befindet sich beispielsweise in "Ullmann, Encyklopädie der technischen Chemie", 4. Auflage, Band 23 (1983), 421 bis 424.

Die US-Patentschriften 4,010,152 und 4,063,012 beschreiben die (Co)polymerisation ethylenisch ungesättigter Monomerer wie Vinylchlorid mit ausgewählten aliphatischen Alpha-(Hydroperoxy)-azo-Verbindungen bzw. ihren Salzen, die gemäß der angegebenen Strukturformel der Stoffklasse der Hydrazon-Derivate zuzuordnen sind und als ausgewählte Hydrazonperoxide angesprochen werden können. Nach der Lehre der zuerst genannten Druckschrift werden sie durch Umsetzung von Alpha-Halogen-azoverbindungen mit Natriumperoxid oder Wasserstoffperoxid in Gegenwart von Säureaktzeptoren hergestellt und sollen dann zur Polymerisationsauslösung eingesetzt werden. Die überwiegende Zahl der Beispiele dieser Druckschrift sowie der parallelen- zweiten genannten US-Patentschrift beschreiben die Herstellung der Hydroperoxidverbindungen auf einem Weg, der im Rahmen der allgemeinen Erfindungsbeschreibung nicht näher erläutert ist. Die jeweils ausgewählten Hydrazonverbindungen werden gelöst in einem Lösungsmittel mit einem Sauerstoffstrom derart begast, daß der Sauerstoff durch die bei Raumtemperatur oder leicht erhöhten Temperaturen gehaltene Lösung der Hydrazonverbindungen geleitet wird. Die jeweiligen Hydroperoxide werden in hohen Ausbeuten von 80 % oder mehr erhalten und gegebenenfalls durch Tieftemperaturkristallisation gereinigt. Die Hydroperoxide können als Startersysteme für die Polymerisation von beispielsweise Vinylchlorid oder ungesättigten Polyester-Styrolharzen eingesetzt werden.

Eine Reihe älterer Veröffentlichungen beschäftigt sich mit Verbindungen dieser Art und ihrer Entstehung insbesondere durch Autoxidation. Bereits im Jahre 1914 beschreiben M. Busch et al. die Autoxidation von Hydrazonen in Ber. 47 (1914) 3277 bis 3291. Formuliert wird hier die vermeintliche Bildung der Peroxide als eine Anlagerung eines Sauerstoffmoleküls an die C:N-Doppelbindung des Hydrazons unter Bildung eines peroxidischen Vierrings. Erneut wird die Autoxidation der Phenylhydrazone beschrieben in K. H. Pausacker, J. Chem. Soc. 1950, 3478 bis 3481. Untersucht wird hier die nichtkatalysierte Reaktion reiner Phenylhydrazone und die entsprechenden Reaktionen unter Zusatz einer geringen Menge an Benzoylperoxid als katalysierte Reaktion. Eine weiterführende Strukturaufklärung zur Konstitution der Hydrazonperoxide wird gegeben von R. Criegee et al., Ber. 84 (1951) 219 bis 224. Nachgewiesen wird hier, daß sich die Hydrazonperoxide - wenigstens bei Raumtemperatur oder entsprechend niedrigen Temperaturen - nur aus Derivaten von Hydrazinverbindungen bilden können, die am substituierten N-Atom noch ein Wasserstoffatom enthalten.

Die US 4 855 373 beschreibt trifunktionelle Hydrazone, nämlich aliphatische und aromatische Hydrazone von 1,3,5-Trisacetylbenzol, als Initiator für die Vinylpolymerisation. Bevorzugt werden Acrylsäure und deren Amide und Ester mit C₁ bis C₄-Alkoholen mit 1,3,5-Tris(acetyl-t-butylhydrazonyl)benzol polymerisiert. Die Polymerisation erfolgt in Gegenwart oder in Abwesenheit von Luftsauerstoff, wobei seine Entfernung bevorzugt wird. Bei Zusatz einer Hydrazon-Lösung polymerisierte die Acrylsäure, deren wäßrige Lösung vorher mit Stickstoff gespült wurde, innerhalb von 30 Sekunden (siehe Beispiel 1). Ohne Stickstoff-Spülung erfolgte innerhalb von 2 Minuten keine Polymerisation, wohl aber bei der anschließenden Stickstoff-Spülung. Die Polymerisation startete also unmittelbar nachdem man die Vinyl-Monomeren und die Hydrazon-Verbindungen gemischt hatte.

Die ältere Anmeldung DE 40 00 776 beschreibt Hydrazon-Verbindungen folgender allgemeiner Formel als Starter oder Hauptkomponente im Startersystem für die Aushärtung von olefinisch ungesättigten Verbindungen durch radikalische Polymerisation mittels Umgebungsluft:

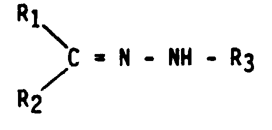

Darin sind die Reste R₁, R₂ und R₃ wenigstens anteilsweise gleich oder verschieden und haben die nachfolgende Bedeutung:
- R₁: ein geradkettiger, verzweigter oder cyclischer und gegegebenenfalls substituierter Alkylrest oder ein gegebenenfalls substituierter Arylrest,
- R₂: Wasserstoff, ein geradkettiger, verzweigter oder cyclischer und gegebenenfalls substituierter Alkylrest oder ein gegebenenfalls substituierter Arylrest, wobei R₁ und R₂ zusammen mit dem gemeinsam substituierten C-Atom auch einen cycloaliphatischen Rest bilden können, der auch substituiert sein kann,
- R₃: ein geradkettiger, verzweigter oder cyclischer und gegegebenenfalls substituierter Alkylrest oder ein gegebenenfalls substituierter Arylrest.

Die Erfindung geht von der Aufgabe aus, unter Benutzung des geschilderten vorbekannten Wissens neue Möglichkeiten für den praktischen Einsatz solcher Starter bzw. Aktivatoren und Aktivatorsysteme zu entwickeln, die zur Polymerisationsauslösung an olefinisch ungesättigten Systemen in vereinfachter Weise Verwendung finden können. Den Aktivatoren soll - in Abmischung mit radikalisch polymerisierbaren Stoffen bzw. Stoffgemischen der Praxis - die Fähigkeit immanent sein, durch Zutritt von Umgebungsluft aktivierbar zu sein. Diese Aktivierung soll in bevorzugten Ausführungsformen schon bei Raumtemperatur eintreten, gegebenenfalls ist eine Temperaturerhöhung vorgesehen. Ein besonders wichtiger Aspekt der Erfindung richtet sich auf Mehrstoffsysteme der genannten Art, die einfach durch Zutritt von Umgebungsluft bei Raumtemperatur zur Auslösung der Startreaktion einer radikalischen Polymerisation ungesättigter Systeme befähigt sind, und zwar bei zeitgesteuerter Aushärtung und vorbestimmbarer Topfzeit. Die Erfindung will in einer wichtigen Ausführungsform insbesondere einkomponentige lagerstabile Systeme schaffen, die in ihrer Applikationsform formbar, insbesondere pastös bis fließfähig sind und eine zur Verarbeitung hinreichende Topfzeit aufweisen, dann aber durch die einfache Einwirkung der Umgebungsluft formstabil aushärten.

Die erfindungsgemäße Lösung ist den Patentansprüchen zu entnehmen. Ihr liegt die Erkenntnis zugrunde, mit welchen Maßnahmen man die Polymerisation der Zusammensetzung so steuern kann, daß einerseits die Zusammensetzung bei Raumtemperatur gelagert werden kann und andererseits ihre Polymerisation auf einfache Weise zu einem gewünschten Zeitpunkt erzielt wird. Bei einer möglichst weitgehenden Ausschaltung von Radikalbildnern wie Sauerstoff, Peroxiden, Hydroperoxiden usw. ist die Zusammensetzung nämlich lagerstabil, d.h. über einen Zeitraum von mindestens 2, vorzugsweise mindestens 12 Monaten erfolgt bei Raumtemperatur keine Polymerisation, erkennbar an der praktisch unveränderten Viskosität. Zumindest ist sie für die jeweilige Anwendung noch brauchbar. Die Lagerstabilität ist insbesondere bei Ausschluß von Licht gegeben, vor allem bei Ausschluß von UV-Strahlen. Durch einfachen Luftzutritt bei Umgebungstemperatur oder erhöhter Temperatur wird jedoch die Polymerisation initiiert und innerhalb akzeptabler Zeit vervollständigt. Es ist somit möglich, einkomponentige Klebstoffe, Dichtungsmassen, Beschichtungsmassen und Formmassen herzustellen und praktisch ohne Aktivitätsverlust zu lagern. Der für die formgebende Verarbeitung benötigte offene Zeitraum des Systems kann weitgehend frei bestimmt werden. Die erfindungsgemäßen Zusammensetzungen haben daher eine erhebliche praktische Bedeutung auf vielen anwendungstechnischen Gebieten.

Gegenstand der Erfindung ist daher eine Zusammensetzung, die
- wenigstens 20 Gew.-% einer mit Sauerstoff radikalisch polymerisierbaren olefinisch ungesättigten Verbindung,
- wenigstens 0,1 Gew.-% eines Hydrazons folgender allgemeiner Formel enthält 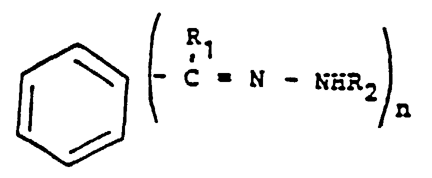 wobei
   n eine Zahl von 1 bis 3,
   R₁ H oder eine Alkylgruppe mit bis zu 40 C-Atomen und
   R₂ unabhängig von den übrigen Substituenten, H oder eine aromatische oder aliphatische Gruppe mit bis zu 40 C-Atomen ist
- 0 bis 5 Gew.-% an Stabilisator,
- 0 bis 5 Gew.-% an Metallverbindung sowie
- 0 bis 80 Gew.-% an Hilfsstoffen entsprechend der Verwendung der Zusammensetzung,
jeweils Gewichts-Anteile in Gewichts-Prozent,
dadurch gekennzeichnet, daß sie durch möglichst weitgehende Ausschaltung von Radikalbildnern für einen Zeitraum von mindestens zwei Monaten bei Raumtemperatur lagerstabil ist.

Zu den 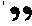 olefinisch ungesättigten Verbindungen" gehören alle acyclischen und cyclischen aliphatischen Kohlenwasserstoffe mit einer oder mehreren reaktionsfähigen Doppelbindungen im Molekül. Insbesondere zählen dazu alle Vinyl-Monomere, darüber hinaus aber insbesondere auch Acrylsäure, Methacrylsäure, Styrol und Butadien sowie deren Derivate. Sie können ganz oder teilweise auch in Form reaktiver vorgebildeter Oligomer- und/oder Polymer-Verbindungen vorliegen. Besonders bevorzugt sind Monomere oder Oligomere mit freien Carbonsäuregruppen.

Die erfindungsgemäßen Hydrazon-Verbindungen sind mono-, di- oder trifunktionell. Bevorzugt werden die trifunktionellen Verbindungen. Die Reste R₁ und R₂ sind vorzugsweise lineare und/oder cyclische Alkylgruppen mit bis zu 40 C-Atomen, insbesondere mit 3 bis 8 C-Atomen. Mindestens ein R₂-Rest pro Molekül sollte eine solche Alkylgruppe sein. Die Reste R₁ und R₂ können unsubstituiert oder substituiert sein. Zu berücksichtigen ist hierbei, daß durch die Substitution dieser Reste insbesondere des Restes R₂ ein gewisser Einfluß auf die Reaktivität des Aktivatorsystems genommen werden kann. Liegt beispielsweise ein aromatisches System, insbesondere ein Phenylrest vor, so kann durch geeignete Substitution dieses Phenylrestes eine Reaktionsbeschleunigung dadurch erreicht werden, daß an sich bekannte Elektronen-schiebende Substituenten an diesem Phenylrest in R₂ vorgesehen werden. Der bereits zitierte einschlägige Stand der Technik gibt darauf klare Hinweise, vergleiche hierzu beispielsweise die Literaturstelle Pausacker a.a.0. Seite 3480, Tabelle. Elektronen-schiebende und damit Reaktions-beschleunigenden Substituenten sind beispielsweise Alkyl-, Alkoxy- und/oder Halogensubstituenten am Phenylrest in R₂, umgekehrt wirken stark Elektronen-ziehende Substituenten von der Art der -NO₂-Gruppe verlangsamend auf den Reaktionsablauf ein. Zu solchen Elektronenschiebenden bzw. Elektronen-ziehenden Effekten durch Substitution und zur Struktur der jeweiligen Substituenten besteht umfangreiches allgemeines Fachwissen, auf das hier verwiesen wird.

Auch dem Rest R₁ aus der allgemeinen Formel kann durch Wahl der jeweiligen Konstitution und der gegebenenfalls vorgesehenen Substitution die Geschwindigkeit des Reaktionsablaufes beeinflussende Wirkung zukommen. Auch hierzu kann auf die einschlägige und bereits genannte Literatur verwiesen werden, vergleiche hierzu die zitierte Veröffentlichung Criegee et al. a.a.O. Seite 222 sowie die im Rahmen dieser Tabelle zitierte Literatur.

Zur außerordentlichen Vielgestaltigkeit für die bestimmte Beschaffenheit der Reste R₁ und R₂ aus den Verbindungen der allgemeinen Formel gibt die bereits benannte US-PS 4,010,152 mit ihren Formelbildern aus den Spalten 6 bis 14 Aufschluß. Dargestellt sind hier die Hydrazonverbindungen bereits in Form ihrer Hydroperoxide, wie sie sich auch erfindungsgemäß im Reaktionsablauf in situ bei Zutritt von Luftsauerstoff bilden. Die umfangreichen Angaben dieser zuletzt genannten Druckschrift zu der bestimmten Beschaffenheit der Hydrazonverbindungen bzw. der aus ihnen in situ entstehenden Hydroperoxide gelten für die Lehre der Erfindung im Zusammenhang mit der Definition der Verbindungen der allgemeinen Formel. Aus Zweckmäßigkeitsgründen wird auf diese ausführliche druckschriftliche Darstellung im Zusammenhang mit der Erfindungsbeschreibung Bezug genommen. Selbstverständlich kann der Benzol-Ring noch weitere Substituenten enthalten, wenn sie die Starter-Funktion nicht stören.
Konkrete Beispiele sind: Acetophenon-Methylhydrazon (n = 1, R₁ = R₂ = CH₃), Acetophenon-t-Butylhydrazon (n = 1, R₁ = CH₃, R₂ = C(CH₃)₃).

Bevorzugtes Hydrazon ist das 1,3,5-Tris-(acetyl-alkyl-hydrazon)-benzol.

Wie bereits gesagt, kommt der Reinheit der Zusammensetzung für die gezielte Polymerisation, insbesondere für die Lagerung eine besondere Bedeutung zu. Der Sauerstoff kann erfindungsgemäß durch Entgasung entfernt werden. Dazu wird bevorzugt die homogenisierte Zusammensetzung ohne das Hydrazon bei ca. -196 °C für 2 bis 5 Minuten einem Vakuum von 0,5 Torr ausgesetzt und anschließend auf Raumtemperatur erwärmt. Durch mehrmaliges Wiederholen dieses Gefrier/Tau-Zykluses wird restlicher Sauerstoff aus dem System entfernt. Eine einfache und praxisnahe Stimmung besteht darin, die Zusammensetzung bei 80 °C unter Ausschluß von Luft aufzubewahren. Nach 24 Stunden darf noch keine Polymerisation eingetreten sein. Die Entgasung kann auch auf anderem Wege durchgeführt werden, z.B. mit Hilfe von Ultraschall oder auf chemischem Wege.

Es ist bekannt, daß Olefine und andere ungesättigte Verbindungen, insbesondere polymerisierbare Monomere für ihre Lagerung stabilisiert werden müssen. Dabei geht man von folgenden Grundtypen der Reaktion aus:
1. Stabilisierung gegen O₂ durch Zusatz von Antioxidantien und
2. Stabilisierung gegen Radikale durch Zusatz von Radikalinhibitoren.

Aus dem allgemeinen chemischen Wissen seien im nachfolgenden typische Stabilisatorkomponenten aufgezählt, wobei jeweils in Klammern hinter der speziellen Verbindung angegeben ist, welchem Mechanismus der Stabilisator zuzuordnen ist: Pyrogallol (1), O₂-inhibierte Acrylate (1), Hydrochinon (1,2), Hydrochinonmonomethylether (1,2), Butylhydroxytoluol (2) und Phenothiazin (2). Besondere Bedeutung zur Stabilisierung des Systems gegen unerwünschte vorzeitige Abreaktion sind Desoxygenatoren vom Typ des Triphenylphosphins sowie Jodid-Jod-Lösungen. Ihre Menge bemißt sich nach den Einsatzzweck. Sie kann im Einzelfall durch fachgerechte Überlegungen und/oder durch Vorversuche einfach ermittelt werden. Ganz allgemein beträgt der Gewichtsanteil an Stabilisatoren höchstens 5 Gew.-%, vorzugsweise 0,01 bis 1 Gew.-%, bezogen auf die gesamte Zusammensetzung. Eine zu hohe Menge verzögert die gewünschte Polymerisation bei Zutritt von Luft.

Die erfindungsgemäße Zusammensetzung enthält vorzugsweise auch noch einen Zusatz an Metallverbindungen, die in mehreren Wertigkeitsstufen auftreten können.Besonders aktiv können hier ausgewählte Vertreter der Übergangsmetalle sein. Der jeweiligen Auswahl des Metalls kann unter anderem geschwindigkeitsbestimmender Charakter zur Polymerisationsauslösung zukommen. Bei Raumtemperatur hochaktive Komponenten leiten sich z. B. vom Kupfer, Kobalt, Vanadium und/oder Mangan ab. Verbindungen des Eisens kommt allerdings eine besondere Bedeutung und gute Reaktionsbeschleunigung zu.
Für das für viele Anwendungsgebiete besonders vorteilhafte Arbeiten bei Raumtemperatur eignen sich insbesondere Eisen-, Kobalt-und/oder Manganverbindungen, gegebenenfalls in Abmischung mit weiteren metallischen Komponenten wie Verbindungen des Blei, Cer, Calcium, Barium, Zink und/oder Zirkon. Es kann hier auf die einschlägige Fachliteratur verwiesen werden, vergleiche beispielsweise die zitierte Veröffentlichung in "Ullmann" a.a.O. sowie die dort zitierte Vor-Literatur.
Die hier betroffenen Metalle werden in Form solcher Verbindungen eingesetzt, daß sie wenigstens anteilsweise im Gesamtsystem löslich sind. Es kommen dabei sowohl seifenartige Metallverbindungen als auch in anderer Form insbesondere komplex an organische Reste gebundene Typen in Betracht. Typische Beispiele für das Arbeiten im Sinne des erfindungsgemäßen Handelns ist die Verwendung entsprechender Metallnaphthenate bzw. Metallacetylacetonate. Besteht eine hinreichende Löslichkeit von anorganischen Salzen im System dann ist allerdings auch die Verwendung solcher anorganischer Systeme möglich. Ein typisches Beispiel hierfür ist das Eisenchlorid, das bei seinem Einsatz im erfindungsgemäßen System eine deutlich beschleunigende Wirkung zeigt.
Es kann zweckmäßig sein, die Metallverbindungen jeweils in einer niedrigen Wertigkeitsstufe des Metalls - beispielsweise also als Kobalt (II) oder Mangan (II) - einzusetzen. In anderen Fällen eignet sich auch die Verwendung der Metallverbindung in der höheren Wertigkeitsstufe des Metalls. So kann beispielsweise Eisen auch in Form der Fe³⁺-Verbindungen verwendet werden.

Die erfindungsgemäß gewünschtenfalls mitverwendeten Aktivatorkomponenten der hier betroffenen Art sind die vielfältigen Mischungskomponenten mit Reduktionswirkung, wie sie in üblichen Redoxsystemen zur Polymerisationsauslösung eingesetzt werden. Verwiesen wird auf die einschlägige umfangreiche Literatur, beispielsweise W. Kern, Makromol. Chem. 1, 249 (1947) sowie C. Srna, Angew. makromol. Chem. 9, 165 (1969) sowie das allgemeine Fachwissen, wie es z. B. beschrieben ist in Houben Weyl "Methoden der organischen Chemie" Band 14/1, 263 bis 297.
Als besonders aktiv hat sich hier die Klasse der Alpha-Hydroxyketone, beispielsweise mit ihren Vertretern Butyroin, Benzoin oder Azetoin erwiesen. Die Lehre der Erfindung ist jedoch keineswegs hierauf eingeschränkt. Auf die in den erfindungsgemäßen Beispielen dargestellten Modifikationen wird verwiesen. Wesentlich ist, daß diese Stoffklasse in den erfindungsgemäß eingesetzten Aktivatorsystemen zwar eine wichtige reaktionsbeschleunigende Funktion übernehmen können, daß jedoch ihre Mitverwendung nicht zwingend ist.

Starter bzw. Aktivatorsysteme aus den hier geschilderten Hauptkomponenten Hydrazonverbindung, wenigstens anteilsweise löslicher metallischer Trockenstoff und/oder gewünschtenfalls mitverwendeter Beschleuniger sind in der Lage, nach Aufnahme von Umgebungsluft alle die radikalisch polymerisierbaren olefinisch ungesättigten Systeme zu initiieren, die bisher mit den verschiedenartigsten insbesondere peroxidischen Startersystemen eingesetzt werden.

Zur Definition der weiteren Bestandteile der erfindungsgemäßen Zusammensetzung kann auf die umfangreichen Angaben der einschlägigen Literatur Bezug genommen werden, die sich mit der Herstellung und Verarbeitung von Systemen beschäftigt, die auf Basis olefinisch ungesättigter radikalisch polymerisierbarer Verbindungen aufgebaut sind. In der Fachwelt steht heute eine außerordentlich große Zahl von Stoffsystemen dieser Art zur Verfügung, die auf den jeweiligen Einsatzzweck in ihren Eigenschaften zugeschnitten sind. Olefinisch ungesättigte Reaktivsysteme können dabei auf der Grundlage ausgewählter radikalisch polymerisierbarer ethylenisch ungesättigter Verbindungen oder auf Basis von Mischungen mehrerer Typen solcher Verbindungen aufgebaut sein. Die ethylenisch ungesättigten polymerisierbaren Komponenten können dabei einfunktionelle Verbindungen und/oder mehrfunktionelle Reaktivkomponenten sein.

Die Polymerisation kann schon mit nichtangedickter Zusammensetzung erfolgen, also z.B. mit dem reinen Monomerengemisch. Die Viskosität liegt dann im Bereich von etwa 1 bis 5 mPas. Vorzugsweise sollte jedoch eine Zusammensetzung gewählt werden, die eine Anfangsviskosität von wenigstens etwa 30 bis 100 mPas, bevorzugt von wenigstens etwa 200 oder 300 mPas aufweisen. Ein besonders sicheres Anspringen der Polymerisationsreaktion kann bei Systemen erwartet werden, deren Anfangsviskosität wenigstens etwa 500 mPas und insbesondere wenigstens etwa 1000 mPas beträgt. Alle diese Viskositätswerte sind bestimmt als Brookfield-Viskosität. Handelsübliche Klebstoffsysteme zeigen bekanntlich Viskositäten von wenigstens etwa 3000 mPas und insbesondere Viskositätswerte im Bereich bis etwa 10000 mPas. Materialien dieser Art sind verständlicherweise für die Verarbeitung im Sinne der Erfindung hervorragend geeignet. Die Erfindung ist aber darauf keineswegs eingeschränkt. Auch wesentlich dünnerviskose Systeme beispielsweise streichfähige Lacksysteme - die insbesondere als lösungsmittelfreie Systeme Verwendung finden - sind für den Mechanismus der hier beschriebenen Reaktionsauslösung geeignet, sofern die geschilderten Mindestwerte für die Anfangsviskosität des formgestaltend zu verarbeitenden Materials eingehalten werden. Entsprechendes gilt für andere Einsatzgebiete, beispielsweise für die Herstellung von Kunststofformteilen auf der Basis von Styrol/ungesättigten Polyesterharzen.
Die erforderlichen Anfangsviskositätswerte können insbesondere durch Stoffgemische eingestellt werden, die einen hinreichenden Gehalt an oligomeren und/oder polymeren Komponenten gegebenenfalls in Abmischung mit niedermolekularen ungesättigten, bei Raumtemperatur flüssigen Komponenten wie (Meth)acrylate aufweisen. Entsprechend viskose Massen können aber auch ausschließlich aus Vorkondensaten geeigneter Fließfähigkeit bestehen. Im einzelnen gilt hier das umfangreiche Wissen der Fachwelt zu solchen durch Radikalpolymerisation härtbaren ethylenisch ungesättigten Stoffgemischen.

Die erfindungsgemäß einzusetzenden Mehrstoffgemische sind im allgemeinen als Einkomponentensysteme ausgebildet, die bis zum Einsatz vor Zutritt von Luft geschützt gehalten werden. Sie können allerdings auch als Mehrkomponentensysteme vorgesehen sein. Zum praktischen Einsatz des Systems werden dann die Komponenten miteinander vermischt. Die offene Topfzeit des Systems kann durch geeignete Auswahl und Anpassung der Hauptkomponenten des Aktivatorsystems geregelt werden, so daß also auch hier die Auslösung der Startreaktion und damit letztlich die Aushärtung des Systems unter Umgebungsbedingungen an der Luft möglich ist. In einer Ausführungsform der Erfindung liegen die betroffenen Mehrstoffgemische aus Aktivatorsystem und polymerisierbaren Komponenten als auch bei Luftzutritt nicht-reaktives 2-Komponenten-Systeme vor. Hierbei ist es dann besonders bevorzugt, die Hauptkomponenten der erfindungsgemäß eingesetzten Aktivatorsysteme so voneinander zu trennen, daß die Hydrazon-Verbindung getrennt von den Metallverbindungen gehalten ist. Beide Komponenten können dann im allgemeinen ethylenisch ungesättigte Reaktivmasse enthalten. Zur Verarbeitung bedarf es nur der Vermischung dieser beiden getrennt gehaltenen Komponenten, der Formgebung während der offenen Topfzeit des Systems und des Zutritts der Umgebungsluft.

Die Erfindung erlaubt jeweils die Zusammenstellung optimierter Werkstoffgemische. Unter Wahrung der erfindungsgemäßen Gesetzmäßigkeiten können lösliche und/oder unlösliche Füllstoffe, Elastifizierungsmittel, Verdickungsmittel, Thixotropierungsmittel, Pigmente, Haftvermittler und dergleichen mitverwendet werden, ohne daß die Funktionsfähigkeit des erfindungsgemäßen Startersystems gefährdet ist. Voraussetzung hierfür ist natürlich, daß durch Auswahl der Hilfs- und Füllstoffe sichergestellt ist, Störungen in der Interaktion der Starterkomponenten auszuschließen. Hierzu gilt allgemeines chemisches Wissen.

Die erfindungsgemäße Zusammensetzung ist zweckmäßigerweise gekennzeichnet durch folgende Gewichts-Anteile in Gewichts-Prozent, bezogen auf die gesamte Zusammensetzung:
- wenigstens 20, vorzugsweise wenigstens 40 Gew.-% an olefinisch ungesättigter Verbindung,
- wenigstens 0,1, vorzugsweise 0,5 bis 7,5 und insbesondere 1 bis 4 Gew.-% an Hydrazon,
- 0 bis 5, vorzugsweise 0,01 bis 1 Gew.-% an Stabilisator,
- 0 bis 5, vorzugsweise 0,005 bis 1 und insbesondere 0,1 bis 0,5 Gew.-% an Metallverbindung sowie
- 0 bis 80, vorzugsweise 10 bis 50 Gew.-% an Hilfsstoffen entsprechend der Verwendung der Zusammensetzung, z.B. Füllstoffe, Pigmente, Verdickungsmittel, Haftvermittler und Elastifizierungsmittel.

In den Mehrstoffgemischen der Erfindung machen die Startergemische bevorzugt nicht mehr als etwa 15 Gew.-% und insbesondere nicht mehr als etwa 10 Gew.-% - jeweils bezogen auf das Gewicht des Gesamtsystems - aus. Je nach Aktivität der eingesetzten Komponenten kann dabei das Gewicht des Startergemisches sehr stark abgesenkt werden und beispielsweise bis in den Bereich von etwa 0,1 Gew.-% oder wenigstens etwa 0,5 Gew.-% verringert werden. Besonders geeignet können Mengen des Startersystems von wenigstens etwa 1 Gew.-% sein, bevorzugt bis zu etwa 8 Gew.-%. Alle diese Angaben beziehen sich dabei einerseits auf das Gesamtgewicht der erfindungsgemäßen Zusammensetzung und das Gesamtgewicht der drei Hauptkomponenten des Startersystems.

Die drei zuvor genannten Komponenten des Startersystems sollen dabei in den folgenden Mengenverhältnissen eingesetzt werden - in Gew.-% bezogen auf das Gesamtsystem:
Hydrazon-Verbindungen: wenigstens etwa 0,1 Gew.-%, zweckmäßig 0,5 bis 7,5 Gew.-%, vorzugsweise 1 bis 4 Gew.-% lösliche Metallverbindung: 0 bis 5, vorzugsweise 0,005 bis 1, insbesondere 0,1 bis 5 Gew.-%.
Desoxygenator: 0 bis 5 Gew.-%, vorzugsweise 0,01 bis 1 Gew.-%.

Als in der Praxis vielseitig verwendbare und gebräuchliche Mischungen radikalisch polymerisierbarer Massen werden Stoffgemische von Oligomer- und/oder Polymersubstanzen zusammen mit ethylenisch ungesättigten Monomeren niederen Molekulargewichts eingesetzt. Die Mischungskomponenten höheren Molekulargewichts sind dabei häufig in den Monomeren wenigstens anteilsweise löslich. Stoffgemische dieser Art sind für die Verarbeitung im Sinne der Erfindung besonders geeignet. Der Gehalt an Monomeren - beispielsweise vom Typ (Meth)acrylate, des gegebenenfalls substituierten Styrols und/oder des Acrylnitrils - liegt im allgemeinen bei wenigstens etwa 20 Gew.-% und kann in vielen Anwendungsfällen wenigstens etwa 40 Gew.-% ausmachen. Gew.-% hier jeweils auf das reaktionsbereite fertige Gemisch bezogen. Die Monomerkomponente kann dabei die gewichtsmäßig gesehen weitaus überwiegende Komponente sein, so daß also beispielsweise 60 bis 80 Gew.-% der Gesamtmasse durch das niedermolekulare Monomere gebildet werden. Wie zuvor dargestellt ist hier allerdings darauf zu achten, daß durch die Mitverwendung einer hinreichenden Menge an Verbindungen höheren Molekulargewichts und/oder durch sonstige Eindickungsmittel die wenigstens leicht erhöhte Anfangsviskosität der Stoffgemische zur sicheren Reaktionsauslösung bei Luftzutritt gewährleistet ist.

In charakteristischen Anwendungsbeispielen, die als bevorzugte Ausführungsform in den Rahmen der Erfindung fallen, sind diese Einsatzbedingungen ohnehin gewährleistet. Ohne einen Anspruch auf Vollständigkeit seien hier die folgenden Beispiele genannt: Aerob härtende Dichtungs- und Klebstoffsysteme, streichfähige Mittel für die Oberflächenbeschichtung mit polymerisierbaren insbesondere lösungsmittelfreien Lacken und Anstrichmittel im Sinne von streichfähigen lufttrocknenden Lacksystemen sowie die Herstellung von Formteilen unter Reaktionsauslösung durch Einwirkung von Umgebungsluft, beispielsweise auf Basis von Styrol/ungesättigte Polyesterharze.

### Beispiele

Für die nachfolgenden Beispiele wurden die ethylenisch ungesättigten Verbindungen (nachfolgend auch Monomere genannt) von evtl. vorhandenen Inhibitoren befreit und, soweit möglich, destillativ gereinigt. Bei schwerflüchtigen, nicht destillierbaren Monomeren wurde durch Evakuieren und anschließendes mehrstündiges Durchleiten von N₂ gelöster Sauerstoff entfernt. Die Monomeren wurden unter Inertgas (N₂ oder Ar) gelagert und entnommen.

Die Hydrazone wurden nach literaturbekannten Vorschriften hergestellt (siehe z. B. Houben-Weyl, "Methoden der organischen Chemie", Bd. X/2) und unter Inertgas gelagert und entnommen.

Zur Bestimmung der Aushärtungszeit der polymerisationsfähigen Mehrstoffgemische werden 100 mg der unter Inertgas formulierten Mischung in einem Uhrglas der Umgebungsluft ausgesetzt. Die Mischung ist dann ausgehärtet, wenn sich die gesamte Probenmenge in einen thermoplastischen oder duroplastischen Festkörper. umgewandelt hat.

Für Verklebungen werden Prüfkörper nach DIN 53281 mit der polymerisierbaren Mischung versehen und vor dem Fügen eine definierte Zeit (90 bis 600 sec.) der Umgebungsluft ausgesetzt.

Die Zugscherprüfungen werden nach DIN 53283 an einschnittig überlappten (250 mm²) Proben durchgeführt.

Zur Bestimmung der Lagerzeit wurden ca. 7 g der Zusammensetzung unter Ausschluß von Sauerstoff mit einer Injektionsspritze in handelsübliche, mit Argon gefüllte Klebstoff-Tuben aus einer Al-Legierung mit einem Durchmesser von ca. 1 cm und einer Länge von ca. 8 cm gegeben. Die Tube wurde mit einer Tubenzange verschlossen und bei den angegebenen Temperaturen gelagert. Von Zeit zu Zeit wird visuell geprüft, ob sich die Viskosität merklich verändert hat. Solange das nicht der Fall ist, ist die Zusammensetzung lagerstabil.

Die Beispiele wurden nach folgenden allgemeinen Verfahren durchgeführt:

In einem mit N₂ gefüllten Mehrhalskolben wurde das Monomere vorgelegt und darin das Verdickungsmittel gelöst, oder es wurde gleich eine Mischung eingesetzt. Anschließend wurde die Metall-Verbindung, der Aktivator, der inhibierende Stabilisator sowie ein Haftvermittler zugesetzt, wobei wiederum auf Ausschluß von Sauerstoff geachtet wurde. Die homogenisierte Mischung wurde auf -196 °C abgekühlt, der Kolben auf 0,66 ·10² Nm⁻² (0,5 Torr) evakuiert und anschließend auf Raumtemperatur erwärmt. Durch mehrmaliges Wiederholen dieses Gefrier/Tau-Zyklus wurde restlicher Sauerstoff aus dem System entfernt. Nun wurde die Hydrazon-Verbindung zugegeben und wiederum wie oben angegeben entgast. Das Gemisch wurde unter Inertgas aufbewahrt.

### Herstellungsbeispiel a: Acetophenon-methylhydrazon

Die Reaktion wurde unter strengem Sauerstoffausschluß in einer N₂-Inertgasatmosphäre durchgeführt. Zu 75 g Acetophenon wurden innerhalb von 5 min 27,5 g Methylhydrazin getropft und das Reaktionsgemisch anschließend für 6 h auf 60 °C erhitzt. Dann wurden 30 g Na₂SO₄ zugegeben und der Feststoff bei Raumtemperatur abfiltriert. Die Lösung wurde fraktionierend destilliert.
Siedepunkt: 90 bis 92 °C (0,8 mbar) Ausbeute: 59 g (65 %)

### Herstellungsbeispiel b: Acetophenon-t-butylhydrazon

Die Reaktion wurde unter strengem Sauerstoffausschluß in einer N₂-Inertgasatmosphäre durchgeführt. 17,5 g Acetophenon, 18,7 g t-Butylhydrazin-Hydrochlorid, 12 g 50 %ige NaOH und 60 ml Ethanol wurden für 14 Stunden zum Rückfluß erhitzt. Das Reaktionsgemisch wurde mit 70 ml Diethylether und 60 ml Wasser versetzt, kräftig aufgerührt, anschließend die organische Phase abgetrennt und nochmals mit 50 ml Wasser gewaschen. Nach Trocknen mit Na₂SO₄ wurde der Ether am Rotationsverdampfer entfernt und der Rückstand fraktionierend destilliert.
Siedepunkt: 86 bis 89 °C (2 mbar) Ausbeute: 24 g (83 %)

Die Zusammensetzungen bestanden aus folgenden Komponenten und wurden folgendermaßen entgast:

| | | | Beispiel 1 | Beispiel 2 | Beispiel 3 | Vergleich I | Beispiel 4 |
|---|---|---|---|---|---|---|---|
| 1. Komponenten | | | | | | | |
| GM 9 | ^{a)} | g | 20 | 20 | 20 | - | 20 |
| GM 1 | ^{b)} | g | - | - | - | 10 | - |
| Fe (acac)₃ | ^{c)} | g | 2,6 | - | 2,6 | - | 2,6 |
| BUTYROIN | ^{d)} | g | 0,4 | - | 0,4 | - | - |
| Jod-Lösung | ^{e)} | ml | 0,5 | 0,5 | 0,5 | - | 0,75 |
| JPA-514 | ^{f)} | g | 0,1 | 0,1 | - | - | 0,1 |
| Methacryloyloxyethyl-succinat | ^{g)} | g | - | - | 1 | - | - |
| Acetophenonmethylhydrazon | | g | - | - | - | - | 0,6 |
| Acetophenon-t-butylhydrazon | | g | 0,78 | - | - | - | - |
| Tris(acetyl-butylhydrazonyl)benzol | | g | - | 0,6 | 0,6 | 0,3 | - |

| 2. Entgasung | | | | | | | |
|---|---|---|---|---|---|---|---|
| a) ohne Hydrazon | | | 2x4 min | 1x4 min | 2x5 min | - | |
| b) mit Hydrazon | | | 1x4 min | 1x4 min | 1x5 min | - | |

| | | | | | | | |
|---|---|---|---|---|---|---|---|
| Fußnoten a) bis g) auf der folgenden Seite a) Mischung aus Methacrylsäuremethylester und PLEXIDON M 449 im Gewichtsverhältnis von 50 : 10. PLEXIDON M 449 ist ein hochmolekulares Polymethylmethacrylat der Fa. Röhm. | | | | | | | |
| b) Mischung aus Methacrylsäuremethylester und PLEXIGUM MB 319 im Gewichtsverhältnis von 50 : 40. PLEXIGUM MB 319 ist ein Methylmethacrylat-Ethylacrylat-Copolymer der Fa. Röhm. | | | | | | | |
| c) 10 %ige Eisen(3)-acetylacetonat-Lösung in Hydroxypropylenmethacrylat | | | | | | | |
| d) Hydroxyoctan-4-on, C8^{H}16^{O}2 | | | | | | | |
| e) 1,7 Gew.-% Jod in Tetrahydrofurfurylmethacrylat | | | | | | | |
| f) Mono-Methacryloyloxyethylphosphat | | | | | | | |
| g) Methacryloyloxyethylsuccinat, | | | | | | | |

| Eigenschaften der Zusammensetzungen (nb = nicht bestimmt) | | | | | |
|---|---|---|---|---|---|
| | Beispiel 1 | Beispiel 2 | Beispiel 3 | Vergleich I | Beispiel 4 |
| 1. Direkt nach Herstellung | | | | | |
| a) Aushärtungszeit (min) | 40 | 55 | 35 | 26 | 30 |
| b) Zugscherfestigkeit (N/mm²) | | | | | |
| Fe (ST1203) | 5,1 | 14,3 | 7,6 | nb | 25,1 |
| PVC | 4,7 | 3,2 | 3,7 | nb | 5,0 |

| 2. Nach 10 Tagen bei 50 °C | | | | | |
|---|---|---|---|---|---|
| a) Aushärtungszeit (min) | 40 | nb | 35 | 0 | 37 |
| b) Zugscherfestigkeit (N/mm²) | | | | | |
| Fe (ST1203) | 4,4 | nb | 6,7 | nb | 17,2 |
| PVC | 5,5 | nb | 4,7 | nb | 4,8 |

| 3. Nach 20 Tagen bei 50 °C | | | | | |
|---|---|---|---|---|---|
| a) Aushärtungszeit (min) | nb | nb | 35 | nb | nb |
| b) Zugscherfestigkeit (N/mm²) | nb | nb | | nb | nb |
| Fe (ST1203) | | | 8,0 | | |
| PVC | | | 4,0 | | |

| 4. Lagerstabilität | | | | | |
|---|---|---|---|---|---|
| a) bei 80 °C (Std.) | > 2 | > 2 | > 2 | 0,0 | nb |
| b) bei Raumtemperatur (Monate) | > 2 | > 2 | nb | 0,0 | > 2 |

Die Beispiele 1 bis 3 zeigen deutlich die Überlegenheit der erfindungsgemäßen Zusammensetzung gegenüber einem Vergleich gemäß der US 4 855 379 bezüglich einer gezielten Polymerisation: Sie sind zunächst lagerstabil über einen für die Praxis ausreichenden Zeitraum von mehreren Monaten und härten dann auf einfache Weise bei Zutritt von Luft bereits bei Raumtemperatur innerhalb von 1 Stunde aus. Die erzielten Festigkeiten genügen üblichen Anforderungen. Es ist kein Aktivitätsverlust zu beobachten. Die bekannte Zusammensetzung beginnt dagegen sofort nach dem Mischen der Komponeten zu polymerisieren, wie in dem US-Patent angegeben.

## Patentansprüche

1. Zusammensetzung, die
- wenigstens 20 Gew.-% einer mit Sauerstoff radikalisch polymerisierbaren olefinisch ungesättigten Verbindung,
- wenigstens 0,1 Gew.-% eines Hydrazons folgender allgemeiner Formel enthält 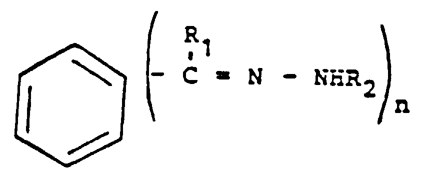 wobei
n eine Zahl von 1 bis 3,
R₁ H oder eine Alkylgruppe mit bis zu 40 C-Atomen und
R₂ unabhängig von den übrigen Substituenten, H oder eine
aromatische oder aliphatische Gruppe mit bis zu 40 C-Atomen ist,
- 0 bis 5 Gew.-% an Stabilisator,
- 0 bis 5 Gew.-% an Metallverbindung sowie
- 0 bis 80 Gew.-% an Hilfsstoffen entsprechend der Verwendung der Zusammensetzung,
jeweils Gewichts-Anteile in Gewichts-Prozent,
dadurch gekennzeichnet, daß sie durch möglichst weitgehende Ausschaltung von Radikalbildnern für einen Zeitraum von mindestens zwei Monaten bei Raumtemperatur lagerstabil ist.

2. Zusammensetzung nach Anspruch 1, dadurch gekennzeichnet, daß ein- und/oder mehrfunktionell ethylenisch ungesättigte polymerisierbare Komponenten und dabei bevorzugt Acryl- und/oder Methacrylsäure, Acrylat- und/oder Methacrylat-Verbindungen bzw. -Systeme, Styrol bzw. Styrol-Derivate und/oder Acrylnitril enthaltende Komponenten verwendet werden, die auch ganz oder teilweise in Form reaktiver vorgebildeter Oligomer- und/oder Polymer-Verbindungen vorliegen können.

3. Zusammensetzung nach Anspruch 1, dadurch gekennzeichnet, daß das Hydrazon ein 1,3,5-Tris-(acetyl-alkyl-hydrazon)benzol ist.

4. Zusammensetzung gemäß Anspruch 1, 2 oder 3, gekennzeichnet durch einen Zusatz an Stabilisatoren gegen Radikale und O₂-Einwirkung, vorzugsweise Triphenylphosphin und Jod.

5. Zusammensetzung gemäß mindestens einem der Ansprüche 1 bis 4, gekennzeichnet durch einen Zusatz an Metall-Verbindungen, die in mehreren Wertigkeitsstufen auftreten können, als Aktivator, insbesondere Fe, Co, Mn, V.

6. Zusammensetzung gemäß mindestens einem der Ansprüche 1 bis 5, dadurch gekennzeichnet, daß sie formgebend verarbeitbar ist und eine Viskosität von wenigstens 100, vorzugsweise 300, insbesondere 500 mPa·s (Brookfield) aufweist.

7. Zusammensetzung nach mindestens einem der Ansprüche 1 bis 6, gekennzeichnet durch folgende Gewichts-Anteile in Gewichts-Prozent, bezogen auf die gesamte Zusammensetzung:
- wenigstens 40 Gew.-% an olefinisch ungesättigter Verbindung,
- 0,5 bis 7,5 Gew.-% an Hydrazon,
- 0,01 bis 1 Gew.-% an Stabilisator,
- 0,005 bis 1 Gew.-% an Metallverbindung sowie
- 10 bis 50 Gew.-% an Hilfsstoffen entsprechend der Verwendung der Zusammensetzung, z.B. Füllstoffe, Pigmente, Verdickungsmittel und Elastifizierungsmittel.

8. Verwendung der Zusammensetzung nach mindestens einem der Ansprüche 1 bis 7 als Klebstoff und Dichtungsmasse, die durch Einwirkung von Umgebungsluft und insbesondere bei Umgebungstemperatur binden, wobei die olefinische Verbindung vorzugsweise eine Acrylat- oder eine Methacrylat-Verbindung ist und wenigstens teilweise darin ein Polymeres gelöst ist, so daß die Viskosität oberhalb von 500 mPa·s liegt, insbesondere im Bereich von etwa 3 000 bis 10 000 mPa·s.

9. Verwendung der Zusammensetzung nach mindestens einem der Ansprüche 1 bis 7 zur Oberflächenbeschichtung und Herstellung von Kunststoff-Formteilen, die durch Einwirkung von Umgebungsluft und insbesondere bei Umgebungstemperatur aushärten.

10. Zusammensetzung gemäß mindestens einem der Ansprüche 1 bis 7, dadurch gekennzeichnet, daß sie durch Entgasung herstellbar ist.

11. Herstellung der Zusammensetzung nach mindestens einem der Ansprüche 1 bis 7, gekennzeichnet durch eine ca. 3minütige Entgasung der homogenen Mischung der Zusammensetzungs-Komponenten ohne das Hydrazon bei -196 °C unter einem Vakuum von 0,5 Torr, eine anschließende Erwärmung auf Raumtemperatur und Zusatz des Hydrazons sowie eine abschließende Entgasung entsprechend den vorhergehenden Bedingungen.

12. Zusammensetzung gemäß mindestens einem der Ansprüche 1 bis 7, dadurch gekennzeichnet, daß sie unter Lichtausschluß, insbesondere unter UV-Ausschluß lagerstabil ist.

13. Zusammensetzung nach mindestens einem der Ansprüche 1, 2, 4 bis 7, 10 und 12, dadurch gekennzeichnet, daß das Hydrazon Acetophenon-methylhydrazon ist.

## Claims

1. A composition containing
- at least 20% by weight of an olefinically unsaturated compound capable of radical polymerization with oxygen,
- at least 0.1% by weight of a hydrazone corresponding to the following general formula: 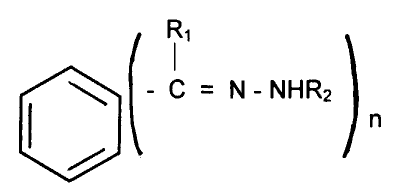 in which
n is a number of 1 to 3,
R₁ is hydrogen or an alkyl group containing up to 40 carbon atoms and
R₂ independently of the other substituents represents H or an aromatic or aliphatic group containing up to 40 carbon atoms,
- 0 to 5% by weight of stabilizer,
- 0 to 5% by weight of metal compound and
- 0 to 80% by weight of auxiliaries adapted to the intended use of the composition,
characterized in that it is stable in storage for at least 2 months at room temperature through the substantial absence of radical formers.

2. A composition as claimed in claim 1, characterized in that mono- and/or polyethylenically unsaturated polymerizable components, preferably components containing acrylic and/or methacrylic acid, acrylate and/or methacrylate compounds or systems, styrene or styrene derivatives and/or acrylonitrile, which may even be completely or partly present in the form of reactive preformed oligomeric and/or polymeric compounds, are used.

3. A composition as claimed in claim 1, characterized in that the hydrazone is a 1,3,5-tris-(acetylalkylhydrazone)-benzene.

4. A composition as claimed in claim 1, 2 or 3, characterized by an addition of stabilizers against radicals and oxygen, preferably triphenyl phosphine and iodine.

5. A composition as claimed in at least one of claims 1 to 4, characterized by an addition of metal compounds, which may occur in several valency stages, as activator, more particularly Fe, Co, Mn, V.

6. A composition as claimed in at least one of claims 1 to 5, characterized in that it can be processed by forming and has a viscosity of at least 100, preferably 300 and, more particularly, 500 mPa.s (Brookfield).

7. A composition as claimed in at least one of claims 1 to 6, characterized by the following percentages by weight, based on the composition as a whole:
- at least 40% by weight of olefinically unsaturated compound,
- 0.5 to 7.5% by weight of hydrazone,
- 0.01 to 1% by weight of stabilizer,
- 0.005 to 1% by weight metal compound and
- 10 to 50% by weight auxiliaries adapted to the application envisaged for the composition, for example fillers, pigments, thickeners and elasticizers.

8. The use of the composition claimed in at least one of claims 1 to 7 as an adhesive and sealing compound activated by exposure to air, particularly at ambient temperature, the olefinic compound preferably being an acrylate compound or a methacrylate compound and a polymer being at least partly dissolved therein so that the viscosity is above 500 mPa.s and more particularly in the range from about 3,000 to 10,000 mPa.s.

9. The use of the composition claimed in at least one of claims 1 to 7 for surface coating and for the production of plastic moldings which cure by exposure to air, particularly at ambient temperature.

10. A composition as claimed in at least one of claims 1 to 7, characterized in that it can be produced by degassing.

11. The production of the composition claimed in at least one of claims 1 to 7, characterized by degassing the homogeneous mixture of the constituent components of the composition without the hydrazone for about 3 minutes at -196EC under a vacuum of 0.5 torr, subsequent heating to room temperature and addition of the hydrazone and final degassing under the same conditions as before.

12. A composition as claimed in at least one of claims 1 to 7, characterized in that it is stable in storage in the absence of light, more particularly in the absence of UV light.

13. A composition as claimed in at least one of claims 1, 2, 4 to 7, 10 and 12, characterized in that the hydrazone is acetophenone methyl hydrazone.

## Revendications

1. Composition qui renferme :
- au moins 20 % an poids d'un composé non saturé oléfiniquement polymérisable par voie radicalaire avec l'oxygène,
- au moins 0,1 % an poids d'une hydrazone de formule générale suivante : 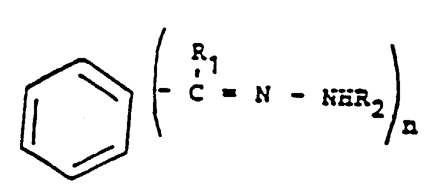 dans laquelle :
n est un nombre allant de 1 à 3,
R₁ est H ou un groupe alkyle ayant jusqu'à 40 atomes de carbone et,
R₂, indépendamment des autres substituants est H ou un groupe aromatique ou aliphatique, ayant jusqu'à 40 atomes de carbone,
- de 0 à 5 % an poids d'un agent stabilisant,
- de 0 à 5 % en poids d'un composé métallique ainsi que,
- de 0 à 80 % an poids de substances auxiliaires correspondant à l'utilisation de la composition, à chaque fois les proportions en poids sont exprimées en pourcentage en poids,
caractérisée en ce que
par élimination la plus complète possible d'agents formateurs de radicaux, elle est stable au stockage pendant au moins deux mois à température ambiante.

2. Composition selon la revendication 1,
caractérisée an ce qu'
on utilise des composants polymérisables non saturés éthyléniquement mono- et/ou polyfonctionnellement, et pour cela de préférence des composants contenant l'acide acrylique et/ou l'acide méthacrylique, des composés ou des systèmes d'acrylate et/ou de méthacrylate, le styrène ou les dérivés du styrène et/ou de l'acrylonitrile, qui peuvent se présenter aussi complètement ou partiellement sous forme de composés oligomères et/ou polymères préformés réactifs.

3. Composition selon la revendication 1,
caractérisée en ce que
l'hydrazone est un 1,3,5 tris-(acétylalkylhydrazono)benzène.

4. Composition selon les revendications 1, 2 ou 3
caractérisée par
une addition d'agents stabilisants contre les radicaux et l'action de O₂, de préférence la triphénylphosphine et l'iode.

5. Composition selon l'une quelconque des revendications 1 à 4,
caractérisée par
une addition de composés métalliques qui peuvent survenir à plusieurs degrés de valence en tant qu'activateur, en particulier Fe, Co, Mn et V.

6. Composition selon l'une quelconque des revendications 1 à 5,
caractérisée en ce qu'
elle est façonnable par modelage et qu'elle possède une viscosité d'au moins 100, de préférence 300 et en particulier 500 mPas (Brookfield).

7. Composition selon l'une quelconque des revendications 1 à 6,
caractérisée
par les proportions en poids suivantes, en pourcentages en poids, rapporté à la composition totale :
- au moins 40 % en poids de composé non saturé oléfiniquement,
- de 0,5 à 7,5 % en poids d'hydrazone,
- de 0,01 à 1 % en poids d'agent stabilisant,
- de 0,005 à 1 % en poids de composé métallique, ainsi que
- de 10 à 50 % en poids d'agents auxiliaires correspondant à l'utilisation de la composition, par exemple des substances de charge, des pigments, des agents épaississants et élastifiants.

8. Utilisation de la composition selon l'une quelconque des revendications 1 à 7 comme adhésif et masse d'étanchéité qui se lient par action de l'air ambiant de l'environnement et en particulier à la température ambiante,
dans laquelle
le composé oléfinique est de préférence un composé acrylate ou méthacrylate, et dans laquelle un polymère y est dissout au moins partiellement, de sorte que la viscosité se situe au-dessus de 500 mPas, en particulier dans la zone allant d'environ 3000 à 10000 mPas.

9. Utilisation de la composition selon l'une quelconque des revendications 1 à 7, comme revêtement de surface et pour la production de pièces moulées en matière plastique, qui durcissent par action de l'air ambiant et en particulier à la température ambiante.

10. Composition selon l'une quelconque des revendications 1 à 7,
caractérisée en ce qu'
elle peut être produite par dégazage.

11. Production de la composition selon l'une quelconque des revendications 1 à 7,
caractérisée par
un dégazage d'environ 3 minutes du mélange homogène des composants de la composition sans l'hydrazone à -196°C sous vide de 0,5 Torr, par un réchauffage consécutif à température ambiante et par l'addition de l'hydrazone ainsi que par un dégazage final correspondant aux conditions précédentes.

12. Composition selon l'une quelconque des revendications 1 à 7,
caractérisée en ce qu'
elle est stable au stockage à l'abri de la lumière, en particulier à l'abri des rayons UV.

13. Composition selon l'une quelconque des revendications 1, 2, 4 à 7, 10 et 12,
caractérisée en ce que
l'hydrazone est la méthylhydrazone d'acétophénone.
